# EUROPÄISCHE PATENTSCHRIFT

(11) **EP 3 187 390 B1**
(45) Veröffentlichungstag und Bekanntmachung des Hinweises auf die Patenterteilung: **28.07.2021**
(21) Anmeldenummer: 16195325.2
(22) Anmeldetag: 24.10.2016
(51) Int. Cl.: B60W 50/00, B66F 9/06

(54) **VERFAHREN ZUR STEUERUNG EINES FLURFÖRDERZEUGS**
METHOD FOR CONTROLLING AN INDUSTRIAL TRUCK
PROCÉDÉ DE COMMANDE D'UN CHARIOT DE MANUTENTION

(30) Priorität: 31.12.2015 DE 102015123009; 27.01.2016 DE 102016101403
(43) Veröffentlichungstag der Anmeldung: 05.07.2017
(73) Patentinhaber: STILL GmbH, 22113 Hamburg (DE)
(72) Erfinder: Sebastian, Surrey, 22175 Hamburg (DE); Strutz, Jan, 20535 Hamburg (DE); Gütschow, Raphaela, 22043 Hamburg (DE); Wede, Marc, 22941 Bargteheide (DE)
(74) Vertreter: Patentship Patentanwaltsgesellschaft mbH

(56) Entgegenhaltungen:
- DE-A1- 10 317 653
- DE-A1- 19 853 451
- DE-A1-102013 100 419

## Beschreibung

Die Erfindung betrifft ein Verfahren zur Steuerung eines Flurförderzeugs. Insbesondere betrifft die Erfindung ein Verfahren zur Steuerung eines Flurförderzeugs mit mindestens einem Steuergerät, das durch Software die Steuerungsfunktionen bewirkt und bei dem bei einem Betriebsstart des Flurförderzeugs die Software geladen und/oder gestartet wird, wobei der Betriebsstart durch eine Startschaltung veranlasst wird, insbesondere einen Schlüsselschalter, eine PIN-Code-Authentifizierung, einen Startknopf und/oder eine Authentifizierungsmagnet-/transponderkarte.

Flurförderzeuge weisen im Regelfall mindestens ein zentrales Steuergerät, oftmals jedoch eine Mehrzahl von Steuergeräten auf, um die verschiedenen Fahr- und Arbeitsfunktionen des Fahrzeugs zu steuern. Diese Steuergeräte werden durch Microcomputer gebildet, die jeweils ein Betriebssystem und die die Funktionen steuernde Software beim Systemstart laden und starten. Wenn das Flurförderzeug abgestellt und ausgeschaltet wird, werden alle Steuergeräte entweder vollständig von der Spannungsversorgung getrennt, beispielsweise wenn ein Hauptschalter betätigt wird, oder in einen stromsparenden Sleep-Mode versetzt.

Ein Flurförderzeug wird durch eine Startschaltung in Betrieb genommen, die in der Regel durch einen Schlüsselschalter erfolgt, jedoch aber auch durch ein anderes Zugangsgerät erfolgen kann wie etwa die Eingabe eines PIN-Codes oder das Auslesen einer Identifikationskarte. Sobald die Startschaltung erfolgt, beispielsweise durch das betätigen eines "Zündschlüssels" oder Startknopfes, werden alle Steuerungen und Sensoren, die stromlos waren, wieder mit einer Versorgungsspannung versehen oder die Steuerungen werden durch ein Signal, beispielsweise einen Pegelwechsel an einem Steuergeräteeingang, veranlasst, aus dem Sleep-Mode in einen Betriebsmodus zurückzukehren. Ein zentrales Steuergerät bzw. Hauptsteuergerät sowie alle anderen Steuergeräte fahren dann hoch. Dabei gibt das Hauptsteuergerät die Antriebe erst dann frei, wenn die anderen Steuergeräte ebenfalls hochgefahren sind. Erst wenn dies erfolgt ist, kann ein Fahrer das Flurförderzeug bedienen und seine Tätigkeit aufnehmen.

Aufgrund der immer größeren Anzahl an Steuergeräten insgesamt und deren steigender Komplexität, durch die aufwändigere Programme und Betriebssysteme bedingt sind, kann die Zeit für das Hochlaufen bzw. das "Booten" der Steuerungsgeräte relativ lang werden. Dies wird als unangenehm empfunden und schränkt die Verfügbarkeit des Flurförderzeugs ein.

Aus der DE 10 2013 100 419 A ist eine Steuerung eines batterie-elektrisch betriebenen Flurförderzeugs bekannt, wobei die Umsetzung von Komfortfunktionen beschrieben wird.

Aus der DE 103 17 653 A und der DE 198 53 451 A ist jeweils eine Steuerung eines mit einem Verbrennungsmotor betriebenen Fahrzeugs bekannt, wobei Maßnahmen für einen schnelleren Start des verbrennungsmotorisch betriebenen Fahrzeugs beschrieben werden.

Der vorliegenden Erfindung liegt daher die Aufgabe zugrunde, ein Verfahren zur Steuerung eines Flurförderzeugs zur Verfügung zu stellen, mit dem die zuvor genannten Nachteile vermieden werden und dass ein schnelles Starten des Betriebes des Flurförderzeugs ermöglicht.

Diese Aufgabe wird durch ein Verfahren mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Steuerung eines Flurförderzeugs mit mindestens einem Steuergerät, das durch Software die Steuerungsfunktionen bewirkt und bei dem bei einem Betriebsstart des Flurförderzeugs die Software geladen und/oder gestartet wird, wobei der Betriebsstart durch eine Startschaltung veranlasst wird, insbesondere einen Schlüsselschalter, eine PIN-Code-Authentifizierung, einen Startknopf und/oder eine Authentifizierungsmagnet-/transponderkarte, ein Laden und/oder Starten der Software noch vor der Startschaltung bereits erfolgt, sobald ein Fahrererkennungssensor die Anwesenheit eines Fahrers erkennt.

Die Hochlaufdauer der elektrischen Anlage bzw. des oder der Steuergeräte wird um den Zeitraum zwischen dem Erkennen der Anwesenheit eines Fahrers und der eigentlichen Startschaltung verkürzt. Wenn beispielsweise als Fahrererkennungssensor ein Sitzbelegungsschalter dient, wird bereits mit dem Hinsetzen des Fahrers mit dem Start der Steuergeräte begonnen und wenn dann der eigentliche Betriebsstart durch das Drücken eines Startknopfes oder das Betätigen eines "Zündschlüssels" erfolgt, kann der entsprechende Zeitraum eingespart werden.

Vorteilhaft ist der Fahrererkennungssensor ein Sitzbelegungsschalter.

Ein solcher Fahrererkennungssensor ist in vielen Anwendungsfällen bereits bei Flurförderzeugen vorhanden, weil er durch C-Normen gefordert wird, hier beispielsweise die die Sicherheit von Flurförderzeugen betreffende EN 1175. Es bietet sich kostengünstig an, diesen auch für das erfindungsgemäße Verfahren einzusetzen.

In einer weiteren Ausgestaltung des Verfahrens ist der Fahrererkennungssensor ein Totmannschalter.

Das Flurförderzeug kann eine Fahrerkabine mit Tür aufweisen und der Fahrererkennungssensor ein Türkontaktschalter sein.

Durch einen solchen Türkontaktschalter kann die Betätigung der Tür zur Fahrerkabine und somit das Betreten durch einen Fahrer erfasst werden.

In einer weiteren Ausbildung des Verfahrens ist der Fahrererkennungssensor eine bei Annäherung reagierende tragbare Sende-/Empfangseinheit, insbesondere ein Transponder.

Bei einer solchen tragbaren Sende-/Empfangseinheit kann es sich vor allem und beispielsweise um ein "Keyless-Go" System handeln. Es ist auch denkbar, dass die Sende-/Empfangseinheit stets aktiv sendet und nicht erst bei einer Annäherung reagiert, wie beispielsweise ein Transponder. In diesem Fall würde das Flurförderzeug die Annäherung des ständig sendenden Signals erkennen.

Der Fahrererkennungssensor kann ein Radarsensor oder ein optischer Sensor sein.

Vorteilhaft wird das Steuergerät wieder abgeschaltet oder wieder in den Sleep-Modus versetzt, wenn nach einer festgelegten Zeitspanne keine Startschaltung erfolgt.

Eine ungewollte Entladung einer Traktions- oder Starterbatterie kann dadurch verhindert werden.

In einer günstigen Ausgestaltung des Verfahrens erfolgen vor der Startschaltung beim Laden und/oder Starten der Software keine optischen oder akustischen Anzeigen.

Das Flurförderzeug wirkt dadurch nach außen hin weiterhin wie "elektrisch ausgeschaltet", da beispielsweise keinerlei Displays aktiviert werden. Dies verhindert, dass ein Fahrer oder eine das Flurförderzeug bedienende Person über den Status des Flurförderzeugs im Unklaren sein könnte. Der Fahrer weiß, dass noch die Startschaltung vorgenommen werden muss.

## Patentansprüche

1. Verfahren zur Steuerung eines Flurförderzeugs mit mindestens einem Steuergerät, das durch Software die Steuerungsfunktionen bewirkt und bei dem bei einem Betriebsstart des Flurförderzeugs die Software geladen und/oder gestartet wird, wobei der Betriebsstart durch eine Startschaltung veranlasst wird, insbesondere einen Schlüsselschalter, eine PIN-Code-Authentifizierung, einen Startknopf und/oder eine Authentifizierungsmagnet-/transponderkarte,
**dadurch gekennzeichnet,**
**dass** ein Laden und/oder Starten der Software noch vor der Startschaltung bereits erfolgt, sobald ein Fahrererkennungssensor die Anwesenheit eines Fahrers erkennt.

2. Verfahren nach Anspruch 1,
**dadurch gekennzeichnet,**
**dass** der Fahrererkennungssensor ein Sitzbelegungsschalter ist.

3. Verfahren nach Anspruch 1 oder 2,
**dadurch gekennzeichnet,**
**dass** der Fahrererkennungssensor ein Totmannschalter ist.

4. Verfahren nach einem der Ansprüche 1 bis 3,
**dadurch gekennzeichnet,**
**dass** das Flurförderzeug eine Fahrerkabine mit Tür aufweist und der Fahrererkennungssensor ein Türkontaktschalter ist.

5. Verfahren nach einem der Ansprüche 1 bis 4,
**dadurch gekennzeichnet,**
**dass** der Fahrererkennungssensor eine bei Annäherung reagierende tragbare Sende-/Empfangseinheit ist, insbesondere ein Transponder.

6. Verfahren nach einem der Ansprüche 1 bis 5,
**dadurch gekennzeichnet,**
**dass** der Fahrererkennungssensor ein Radarsensor oder ein optischer Sensor ist.

7. Verfahren nach einem der Ansprüche 1 bis 6,
**dadurch gekennzeichnet,**
**dass** das Steuergerät wieder abgeschaltet wird oder wieder in den Sleep-Modus versetzt wird, wenn nach einer festgelegten Zeitspanne keine Startschaltung erfolgt.

8. Verfahren nach einem der Ansprüche 1 bis 7,
**dadurch gekennzeichnet,**
**dass** vor der Startschaltung beim Laden und/oder Starten der Software keine optischen oder akustischen Anzeigen erfolgen.

## Claims

1. Method for controlling an industrial truck with at least one control device which effects the control functions through software and in which the software is loaded and/or started when operation of the industrial truck is started, wherein the start of operation is initiated by a start procedure, in particular a key switch, a PIN code authentication, a start button and/or an authentication magnetic/transponder card,
**characterized in that** the software is loaded and/or started before the start procedure as soon as a driver detection sensor detects the presence of a driver.

2. Method according to Claim 1,
**characterized in that** the driver detection sensor is a seat occupancy switch.

3. Method according to Claim 1 or 2,
**characterized in that** the driver detection sensor is a dead man's switch.

4. Method according to one of Claims 1 to 3,
**characterized in that** the industrial truck has a driver's cab with a door and the driver detection sensor is a door contact switch.

5. Method according to one of Claims 1 to 4,
**characterized in that** the driver detection sensor is a portable transceiver unit that reacts on approach, in particular a transponder.

6. Method according to one of Claims 1 to 5,
**characterized in that** the driver detection sensor is a radar sensor or an optical sensor.

7. Method according to one of Claims 1 to 6,
**characterized in that** the control device is switched off again or is put back into sleep mode if no start procedure occurs after a defined period of time.

8. Method according to one of Claims 1 to 7,
**characterized in that** no optical or acoustic indicators occur before the start procedure when loading and/or starting the software.

## Revendications

1. Procédé permettant de commander un chariot de manutention, comprenant au moins un appareil de commande qui déclenche les fonctions de commande par le biais d'un logiciel, et dans lequel, au moment d'un démarrage de fonctionnement du chariot de manutention, le logiciel est chargé et/ou démarré, le démarrage de fonctionnement étant provoqué par un circuit de démarrage, en particulier un interrupteur à clé, une authentification par code PIN, un bouton de démarrage et/ou une carte d'authentification magnétique ou à transpondeur,
**caractérisé en ce qu'**un chargement et/ou un démarrage du logiciel a/ont lieu avant même la commutation de démarrage dès qu'un capteur de reconnaissance de conducteur reconnaît la présence d'un conducteur.

2. Procédé selon la revendication 1, **caractérisé en ce que** le capteur de reconnaissance de conducteur est un commutateur d'occupation de siège.

3. Procédé selon la revendication 1 ou 2, **caractérisé en ce que** le capteur de reconnaissance de conducteur est un dispositif de l'homme mort.

4. Procédé selon l'une quelconque des revendications 1 à 3, **caractérisé en ce que** le chariot de manutention présente une cabine de conducteur munie d'une porte, et le capteur de reconnaissance de conducteur est un contacteur de porte.

5. Procédé selon l'une quelconque des revendications 1 à 4, **caractérisé en ce que** le capteur de reconnaissance de conducteur est une unité d'émission/réception portable, en particulier un transpondeur, qui réagit en cas d'approche.

6. Procédé selon l'une quelconque des revendications 1 à 5, **caractérisé en ce que** le capteur de reconnaissance de conducteur est un capteur radar ou un capteur optique.

7. Procédé selon l'une quelconque des revendications 1 à 6, **caractérisé en ce que** l'appareil de commande est à nouveau déconnecté ou remis à l'état de veille si aucune commutation de démarrage ne survient après un laps de temps défini.

8. Procédé selon l'une quelconque des revendications 1 à 7, **caractérisé en ce qu'**avant la commutation de démarrage, lors du chargement et/ou du démarrage du logiciel, aucun affichage optique ou acoustique ne survient.
